Europäisches Patentamt

European Patent Office

Office européen des brevets

(11) Veröffentlichungsnummer: **0 254 953**
**A1**

## (12) EUROPÄISCHE PATENTANMELDUNG

(21) Anmeldenummer: 87110172.1

(22) Anmeldetag: 14.07.87

(51) Int. Cl.⁴: **B65G 65/30** , B65G 65/40 , E04H 7/22

(30) Priorität: 31.07.86 DE 3626003

(43) Veröffentlichungstag der Anmeldung:
**03.02.88 Patentblatt 88/05**

(84) Benannte Vertragsstaaten:
**AT BE CH DE ES FR GB GR IT LI LU NL SE**

(71) Anmelder: **Meyer, Hans Jürgen**
**Breitfeldstrasse 18**
**D-6625 Püttlingen(DE)**

(72) Erfinder: **Meyer, Hans Jürgen**
**Breitfeldstrasse 18**
**D-6625 Püttlingen(DE)**

(74) Vertreter: **Leyh, Hans, Dr.-Ing.**
**Patentanwälte Berendt, Leyh & Hering Innere**
**Wiener Strasse 20**
**D-8000 München 80(DE)**

(54) **Silo für Schüttgut.**

(57) Der Silo hat im Bereich des Silobodens (2) eine Austrageinrichtung (27, 28) und wenigstens eine bewegliche Räumeinrichtung (27a, 28a), die das Schüttgut an seine Austragöffnung (21, 21a) lenkt. Im Bereich der Silomittelachse ist ein zentraler Staukonus (6) angeordnet, und horizontal in einem Abstand hiervon ist wenigstens ein Staukonusring (12, 13, 14) angeordnet, der den zentralen Staukonus konzentrisch umgibt. Zwischen den Außenflächen des zentralen Staukonus und des Staukonusrings sowie der Innenwand der Seitenwand (5) werden wenigstens zwei konzentrische, im wesentlichen in einer gemeinsamen Horizontalebene liegende Austragringspalten (17-20) gebildet. Räumorgane (35) der Räumeinrichtung ragen in diese Austragringspalte und die Austrageinrichtung mit der Räumeinrichtung führt eine Kreisbewegung um die Mittelachse aus. Hierbei wird das Schüttgut aus den Austragringspalten zu der Austragöffnung gelenkt, die als Ringschlitz (21, 21a) konzentrisch zwischen den Austragringspalten vorgesehen ist. Bei einer bevorzugten Ausführungsform sind wenigstens vier Austragringzonen, die von Austragringspalten gebildet werden, konzentrisch zur Mittelachse zum zentralen Staukonus angeordnet und jeweils zwei Ringspalten ist eine gemeinsame Austrageinrichtung und Räumeinrichtung zugeordnet. Die somit vorgesehenen beiden Austrage-und Räumeinrichtungen arbeiten unabhängig voneinander und sie gewährleisten eine gleichförmige sowie kontinuierliche Austragung des Schüttguts im Bereich des Bodens des Silos.

FIG. 2

## Silo für Schüttgut

Die Erfindung befaßt sich mit einem Silo für Schüttgut mit einer im Bereich des Silobodens vorgesehenen Austrageinrichtung und wenigstens einer beweglichen Räumeinrichtung, die das Schüttgut zu wenigstens einer Austragöffnung lenkt.

Insbesondere bei Großsiloanlagen, d.h. bei solchen Silos, die ein großes Fassungsvermögen, beispielsweise in der Größenordnung von 84 000 m³ haben, bereitet die gleichmäßige Beladung und das gleichmäßige Austragen erhebliche Schwierigkeiten. Wenn aufgrund von ungleichmäßiger Beladung und/oder ungleichmäßiger Austragung sich im Silo eine unsymmetrische Schüttgutverteilung einstellt, sind die Konstruktionsteile und insbesondere die Wände des Silos aus Sicherheitsgründen relativ dick zu bemessen, damit der Silo auch asymmetrische Schüttgutverteilungen aushält.

Die Erfindung zielt daher darauf ab, unter Überwindung der zuvor geschilderten Schwierigkeiten einen Silo für Schüttgut der eingangs genannten Art derart auszubilden, daß selbst bei Silos mit großem Fassungsvermögen eine gleichmäßige Füllung und gleichmäßige Entleerung in der Weise gewährleistet werden, daß man im Silo immer zuverlässig eine symmetrische Schüttgutverteilung gewährleisten kann.

Hierzu zeichnet sich ein Silo für Schüttgut der eingangs genannten Art dadurch aus, daß im Bereich der Silomittelachse ein zentraler Staukonus angeordnet ist, der in einem horizontalen Abstand von wenigstens einem Staukonusring konzentrisch derart umgeben ist, daß zwischen den Außenflächen des zentralen Staukonus und des Staukonusrings wenigstens zwei konzentrische und im wesentlichen in einer gemeinsamen Horizontalebene liegende Austragringspalte gebildet werden, und daß die wenigstens eine Räumeinrichtung eine Kreisbewegung um die Silomittelachse ausführt und ihre Räumorgane das Schüttgut aus den Austragsringspalten zu der Austragöffnung lenkt, die als Ringschlitz ausgebildet ist und konzentrisch zwischen den Austragringspalten angeordnet ist.

Bei dem erfindungsgemäßen Silo wird das Schüttgut im Bereich des Silobodens auf wenigstens zwei konzentrische Ringbereiche aufgeteilt, so daß das Schüttgut auch im Austragbereich symmetrisch im Siloraum verteilt ist. Die wenigstens eine Räumeinrichtung führt eine Kreisbewegung um die Silomittelachse aus, so daß mit Hilfe der Räumorgane der Räumeinrichtung während ihrer Kreisbewegung das Schüttgut in den Austragsringspalten gleichmäßig und kontinuierlich zum Ringschlitz im Siloboden ausgetragen wird. Durch diesen gleichförmigen Austragvorgang wird gewährleistet, daß das Schüttgut im Silo gleichmäßig wieder in die Austragringspalte rutscht und sich daher wieder ein symmetrischer Schüttgutkegel im Schüttgut insgesamt einstellt. Auf diese Weise ist die Austragsseite beim erfindungsgemäßen Silo so beschaffen, daß das Schüttgut im Bereich des Silobodens gleichförmig ausgetragen werden kann.

Da die Räumeinrichtung bei einem solchen Silo einen Kreisbogen im Bereich der Austragringspalte überstreichen muß, ist die Räumeinrichtung zweckmäßigerweise als Räumwagen ausgebildet, der sich über einen Kreisbogenabschnitt erstreckt und entsprechend bogenförmig gekrümmt ausgebildet ist.

Zur Führung der Kreisbewegung der Räumeinrichtung sind zweckmäßigerweise Schienen vorgesehen. längs denen die Räumeinrichtung verfahrbar ist und die in einem Hohlraum im unteren Bereich des Staukonusringes geschützt untergebracht sind.

In vorteilhafter Weise sind die Räumorgane hängend an der Räumeinrichtung angebracht und vorzugsweise mittels Schraubspindeln in Vertikalrichtung verstellbar, so daß sie aus dem Schüttgut in den Austragringspalten herausbewegt werden können, um Wartungs-oder Reparaturarbeiten an den Räumorganen gegebenenfalls vornehmen zu können.

Zweckmäßigerweise ist der Antrieb für die Ausführung der Kreisbewegung der Räumeinrichtung in dem Hohlraum im unteren Bereich des Staukonusrings angeordnet und vorzugsweise dienen als Antrieb Getriebemotoren und Kettentriebe, die als endlose zahnstangentriebähnliche Übertragungseinrichtungen ausgebildet sind. Die empfindlichen Antriebsaggregate sind daher in diesem Hohlraum des Staukonus vor Verschmutzung geschützt untergebracht. Hierdurch wird eine zu große Störungsanfälligkeit der Antriebsaggregate vermieden.

Zur Versteifung der Anordnung aus zentralem Staukonus und wenigstens einem Staukonusring sind zweckmäßigerweise Radialstreben vorgesehen, die als Querträger ausgebildet sind und vorzugsweise in regelmäßigen Winkelabständen am zentralen Staukonus in wenigstens einer horizontalen Ebene angeordnet sind. Die Auslegung ist hierbei derart getroffen, daß die Grundebene des Staukonusrings vertikal oberhalb der Grundebene im zentralen Staukonus liegt, so daß in vertikaler Richtung zwischen dem eigentlichen Boden des Silos und der Grundebene des Staukonusringes ein vorbestimmter Abstand vorgesehen ist, und in diesem Bereich die Räumeinrichtung mit den Räumorganen oberhalb des als Austragsöffnung dienenden Schlitzes angeordnet sind, der im Siloboden ausgebildet ist.

In vorteilhafter Weiterbildung nach der Erfindung ist unterhalb des als Austragsöffnung dienenden Ringschlitzes eine ebenfalls ringförmig ausgebildete Drehschüttrinne angeordnet, die eine Umlaufbewegung ausführt und das über den Ringschlitz aufgenommene Schüttgut zu einer unterhalb der Drehschüttrinne liegenden Bandfördereinrichtung übergibt. Mit Hilfe dieser Drehschüttrinne wird das gleichmäßig aus den Austragringspalten über den als Austragöffnung dienenden Ringschlitz gleichmäßig ausgetragene Schüttgut ebenfalls gleichmäßig und gleichförmig zu einer weiteren Transporteinrichtung, wie einer Bandfördereinrichtung, übergeben, die das Schüttgut zu einem Austragschacht beispielsweise befördert. Hierdurch wird eine Vergleichmäßigung des ausgetragenen Schüttgutstromes im Bodenbereich des Silos gewährleistet.

Vorteilhafterweise verläuft die Bandfördereinrichtung geradlinig zwischen der Ausgabeseite der Drehschüttrinne und dem Austragschacht des Silos. Um Kohlemischungen zusammenstellen zu können, sind vorzugsweise an der wenigstens einen Bandfördereinrichtung Wiege-und Mischeinrichtungen vorgesehen, wenn entweder mehrere Silos untereinander verbunden sind oder durch eine zusätzliche Silowand auf dem Staukonusring ein"Silo im Silo" gebildet wird.

Um auch die Aufgabe des Schüttgutes im Bereich des oberen Endes des Silos zu vergleichmäßigen, so daß sich ein symmetrischer Schüttgutkegel auch bei stillstehender Austrageinrichtung einstellt, ist in Weiterbildung der Erfindung am oberen Ende des Silos mittig eine Drehschüttrinne als Aufgabeeinrichtung zur bezüglich der Mittelachse des Silos symmetrischen Schüttgutaufgabe angeordnet. Vorzugsweise ist die Drehschüttrinne mittels eines Getriebemotors unter Zwischenschaltung eines Drehkranzes angetrieben.

In weiterer vorteilhafter Ausgestaltung nach der Erfindung ist der zentrale Staukonus als Mittelsäule des Silos bis zur Nähe des oberen Endes des Silos verlängert und ihr oberes Ende ist als Kegelspitze ausgebildet, die vorzugsweise der als Aufgabeeinrichtung dienenden Drehschüttrinne gegenüberliegt. Auf diese Weise wird das Schüttgut bei der Aufgabe gleichmäßig im Innenraum des Silos um die Mittelsäule verteilt.

Gemäß einer vorteilhaften weiteren Ausgestaltung nach der Erfindung dient diese Mittelsäule gleichzeitig zur Abstützung der Silodachkonstruktion und des Silokopfes im Mittelbereich des Silos, der die Drehschüttrinne enthält. Ferner ist die Mittelsäule als Hohlsäule ausgebildet und ihr Innenraum dient als Steigschacht, in den beispielsweise Leitereinrichtungen und Plattformen angeordnet sind, so daß der Silo im Bedarfsfall zu Inspektionszwecken beispielsweise begehbar ist.

Die Silodachkonstruktion ist zweckmäßigerweise zur Horizontalen geneigt, und zwar entsprechend dem Schüttgutkegel, der sich im Innenraum des Silos einstellt.

Dank der erfindungsgemäßen symmetrischen Beladung des Silos und der gleichförmigen Entleerung des Silos mit Hilfe der erfindungsgemäßen Austrageinrichtung, sind wenigstens die Außenwand und der zentrale Staukonus mit der Mittelsäule als dünnwandige Betonkonstruktion ausgeführt. Vorzugsweise ist auch der wenigstens eine, den zentralen Staukonus konzentrisch umgebende Staukonusring aus Beton hergestellt.

Gemäß einer vorteilhaften Ausgestaltung nach der Erfindung ist im Bereich des Bodens des Silos konzentrisch zum ersten Staukonusring horizontal im Abstand wenigstens ein zweiter Staukonusring vorgesehen, wobei zwischen den beiden Staukonusringen ein mit dem Siloboden verbundener weiterer Staukonusring derart vorgesehen ist, daß sich wenigstens zwei weitere konzentrische Austragspalte bilden, denen eine zweite Austrageinrichtung und Räumeinrichtung zugeordnet sind, die entsprechend der ersten Austrageinrichtung und Räumeinrichtung ausgebildet sind. Bei dieser Ausbildung des Silos hat man somit insgesamt vier konzentrische Austragspalte und Austragzonen, die symmetrisch auf der Bodenfläche bezüglich der Silomittelachse verteilt sind. Das Schüttgut in jeweils zwei konzentrischen Ringspalten wird mit einer gemeinsamen Austragsein richtung zum Austragringschlitz gelenkt, so daß auch bei einem durchmessergroßen Boden des Silos ein gleichförmiger und kontinuierlicher Austrag gewährleistet wird. Auch die zweite Austragseinrichtung und Räumeinrichtung sind hierbei in einem Hohlraum im zweiten Staukonusring angeordnet und zweckmäßigerweise sind beide Austragseinrichtungen und beide Räumeinrichtungen in übereinstimmender Weise ausgebildet. Die hierbei möglichen näheren Ausbildungsformen sind bereits vorstehend detailliert abgehandelt.

Um auch beim Stillstand einer der Austragseinrichtungen und Räumeinrichtungen eine weitgehend gleichmäßige kontinuierliche Entleerung des Silos zu gewährleisten, sind die beiden Austragseinrichtungen und Räumeinrichtungen getrennt und unabhängig voneinander angetrieben.

Selbstverständlich ist der zweiten Austragseinrichtung und der zweiten Räumeinrichtung auch eine entsprechende Bandfördereinrichtung unterhalb der zugeordneten Drehschüttrinne zugeordnet, wobei die beiden Bandfördereinrichtungen parallel verlaufen und zu einem gemeinsamen Austragschacht führen.

Bei einer solchen Konstruktion des Silos mit vier konzentrischen Austragzonen am Bodenbereich des Silos sind die beiden konzentrischen Staukonusringe zweckmäßigerweise über mehrere gemeinsame Radialverstrebungen am zentralen Staukonus und an der senkrechten Silowand abgestützt. Hierdurch vereinfacht sich die Erstellung des Bodenbereichs des Silos.

Die Erfindung wird nachstehend an einem be-vorzugten Ausführungsbeispiel anhand der beilie-genden Zeichnung näher erläutert. Darin zeigt:

Fig. 1 eine Vertikalschnittansicht durch eine Ausführungsform eines Silos insgesamt,

Fig. 2 eine im Vergleich zu Fig. 1 vergrößerte Vertikalschnittansicht des Bodenbereichs des Silos von Fig. 1,

Fig. 3 eine Draufsicht auf Fig. 2,

Fig. 4 eine Schnittansicht längs der Linie IV-IV in Fig. 3, und

Fig. 5 eine Detailansicht eines Ausschnitts von Fig. 2.

In den Figuren der Zeichnung sind gleiche oder ähnliche Teile mit denselben Bezugszeichen versehen. Selbstverständlich sind die Darstellungen in den Figuren der Zeichnung beispielhaft.

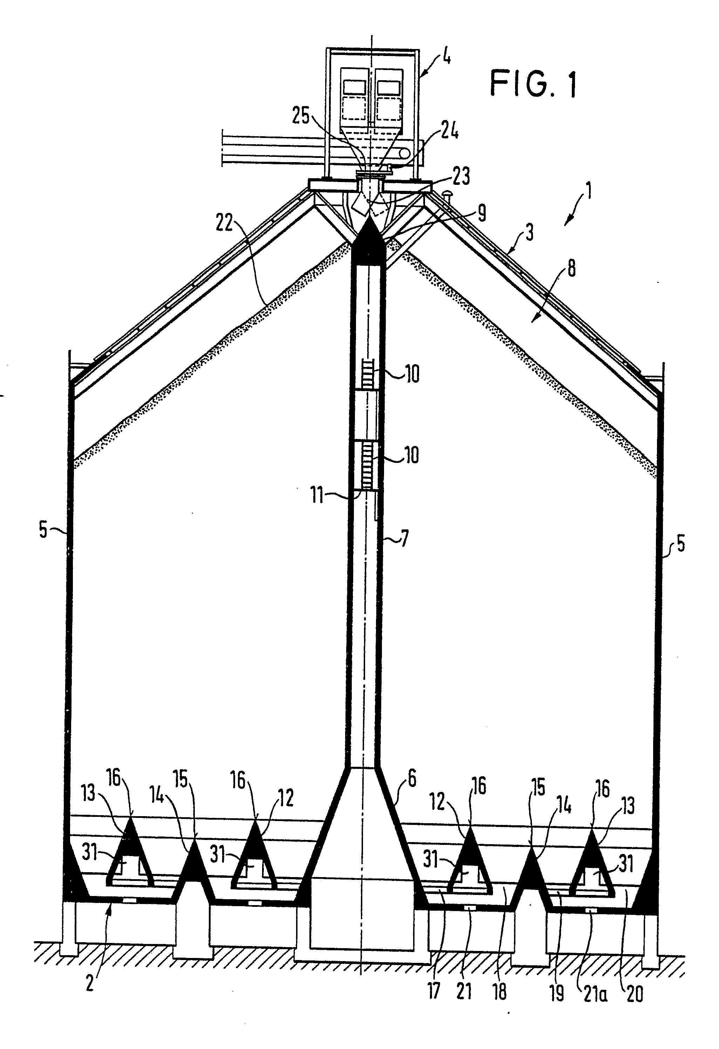

In Fig. 1 ist die Gesamtkonstruktion eines insgesamt mit 1 bezeichneten Silos schematisch gezeigt. Mit 2 ist der Boden des Silos 1, mit 3 das Dachteil und mit 4 das Kopfteil desselben bezeichnet. Die senkrechte Seitenwand zwischen dem Boden 2 und dem Dachteil 3 ist mit 5 bezeichnet. Um die strichpunktiert eingetragene Mittelachse des Silos 1 ist im Bereich des Bodens ein zentraler Staukonus 6 angeordnet, der in senkrechter Richtung als Hohlsäule 7 bis zur Nähe des oberen Endes 8 des Silos 1 verlängert ist. Das obere Ende der Hohlsäule 7 ist als massive Kegelspitze 9 ausgebildet. Die in Fig. 1 schwarz ausgefüllten Bereiche stellen massive Betonteile dar. Der Innenraum der Hohlsäule 7 und des zentralen Staukonus 6 dienen als Steigschacht und es sind dort Leitern 10 und Plattformen 11 an vorbestimmten Stellen angeordnet, um den Silo 1 inspizieren zu können.

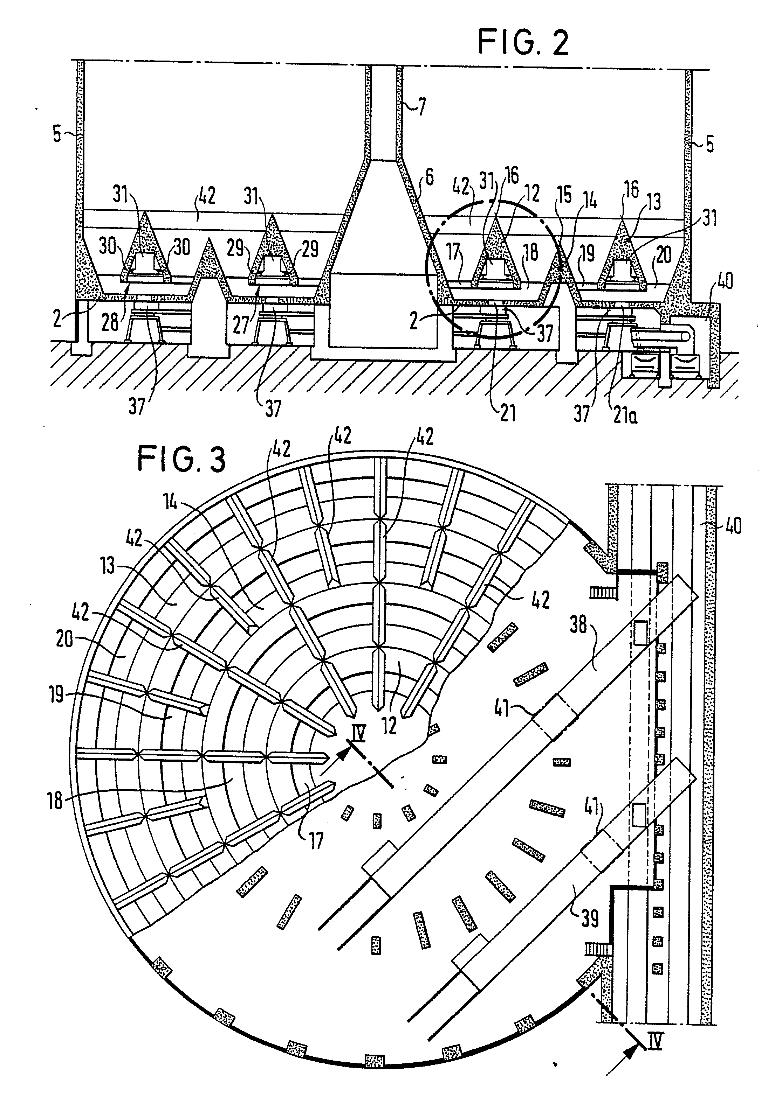

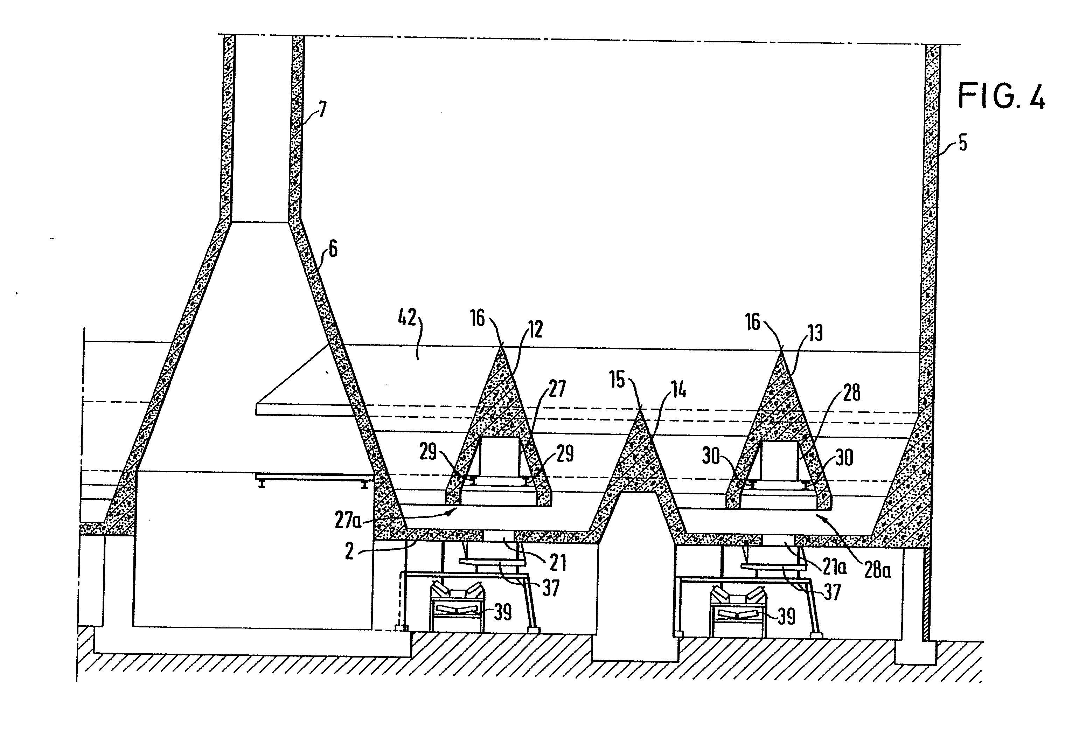

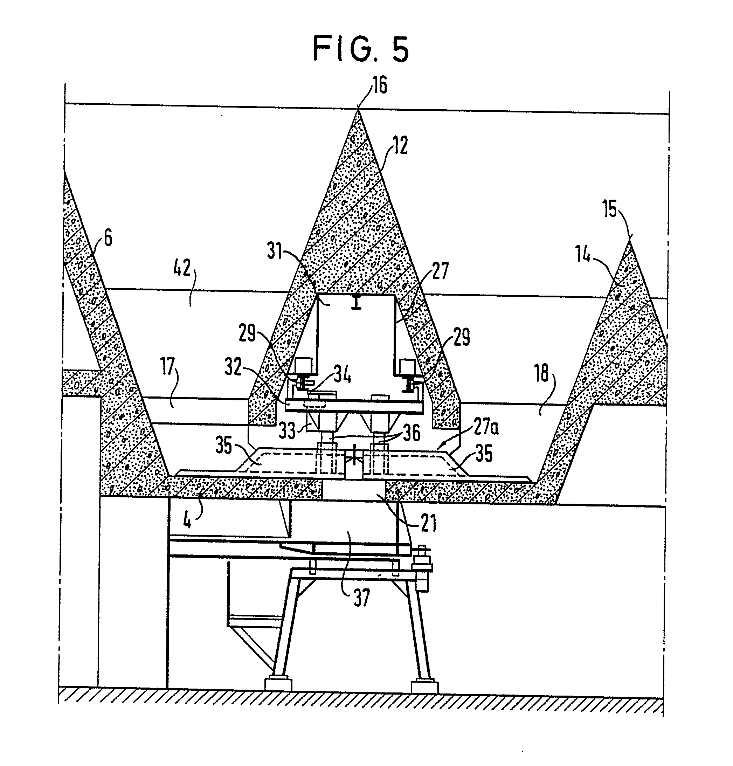

In einem Abstand in vertikaler Richtung vom Boden 2 des Silos 1 und horizontal in einem Abstand von dem zentralen Staukonus 6 ist ein erster Staukonusring 12 angeordnet, der den zentralen Staukonus 6 konzentrisch umgibt, wie dies auch deutlich aus Fig. 2 zu ersehen ist. Konzentrisch zum ersten Staukonusring 12 ist horizontal in einem Abstand, aber etwa in der gleichen horizontalen Ebene, ein zweiter Staukonusring 13 angeordnet (siehe auch Fig. 3). Zwischen dem ersten Staukonusring 12 und dem zweiten Staukonusring 13 ist ein dritter Staukonusring 14 angeordnet, dessen Spitze 15 tiefer als die Spitzen 16 des ersten und zweiten Staukonusrings 12, 13 liegt. Die Grundfläche dieses dritten Staukonusrings 14 ist mit dem Boden 2 des Silos 1 verbunden. Im Bodenbereich des Silos 1 werden daher zwischen der Außenwand des zentralen Staukonus 6 und der einen Außenwand des dritten Staukonusrings 14 sowie den beiden Außenwänden des ersten Staukonusrings 12 zwei konzentrisch zur Mittelachse des Silos 1 im Bodenbereich desselben angeordnete Austragringspalte 17 und 18 gebildet und zwischen der anderen Außenwand des dritten Staukonusrings 14 und der Innenrand der Seitenwand 5 des Silos 1 sowie den beiden Außenwänden des zweiten Staukonusrings 13 werden zwei weitere ebenfalls konzentrisch angeordnete sowie außen liegende Austragringspalte 19 und 20 begrenzt. Diese Austragringspalte 17 bis 20 sind am deutlichsten aus Fig. 3 zu ersehen. Im Boden 2 des Silos 1 sind als Austragsöffnungen unterhalb des ersten und zweiten Staukonusrings 12, 13 Ringschlitze 21 und 21a vorgesehen. Nähere Einzelheiten der Austrageinrichtung und der Räumeinrichtung, die das Schüttgut aus den Austragringspalten 17 bis 20 zu den als Austragsöffnungen dienenden Ring-schlitzen 21 und 21a fördert, werden nachstehend anhand den Fig. 2 und 5 näher erläutert.

Wie ferner aus Fig. 1 zu ersehen ist, ist am oberen Ende des Silos 1 ein Dachteil 3 vorgesehen, das eine Neigung hat, die etwa dem Schüttgutkegel 22 im Siloinnenraum entspricht. Das Dachteil 3 ist an dem massiven Kegelspitzenteil 9 am oberen Ende der Hohlsäule 7 abgestützt. Ferner wird auch das Kopfteil 4 von diesem massiven Kegelspitzenteil 9 getragen und das Kopfteil 4 enthält u.a. eine im Bereich der Silomittelachse angeordnete Drehschüttrinne 23, die als Aufgabeeinrichtung dient und mittels eines Getriebemotors 24 unter Zwischenschaltung eines Drehkranzes 25 drehangetrieben ist. Durch diese Aufgabeeinrichtung wird ermöglicht, daß bei der Befüllung des Silos 1 im Zusammenwirken mit der Kegelspitze 9 sich ein zur Mittelachse des Silos symmetrischer Schüttkegel einstellt.

Bei der in den Figuren gezeigten Ausführungsform des Silos 1 sind vier konzentrisch im Bodenbereich des Silos 1 angeordnete Austragringspalte 17 bis 20 vorgesehen. Selbstverständlich können auch mehr oder weniger Austragringspalte vorgesehen sein, vorausgesetzt, daß diese konzentrisch angeordnet sind und hinsichtlich ihrer Anzahl ein ganzzahliges Vielfaches von 2 darstellen. Anhand den Fig. 2 bis 5 werden insbesondere nähere Einzelheiten der vorgesehenen Austragseinrichtungen und Räumeinrichtungen im Bodenbereich des Silos erläutert. Bei dem dargestellten Ausführungsbeispiel sind in beiden Austragringspalten 17 und 18 eine erste Austragseinrichtung 27 mit einer Räumeinrichtung 27a und in beiden außenliegenden Austragringspalten 19 und 20 eine zweite Austragseinrichtung 28 mit einer zweiten Räumeinrichtung 28a zugeordnet. Diese beiden Austrage-und Räumeinrichtungen 27, 27a und 28, 28a führen eine Kreisbewegung um die Mittelachse aus und sind hierzu längs Schienen 29, 30 jeweils verfahrbar, die in einem Hohlraum 31 im unteren Beeich des jeweiligen Staukonusrings 12, 13 untergebracht und an diesem befestigt sind. Wie insbesondere aus Fig. 5 als Einzeldarstellung zu ersehen ist, ist die Räumeinrichtung 27a der ersten Austragseinrichtung 27 beispielsweise als Räumwagen 32 ausgebildet, der sich über einen Kreisbogenteilabschnitt erstreckt und entsprechend gekrümmte Außen-und Innenkanten hat. Dieser Räumwagen 32 hängt an den Schienen 29 und führt durch Zusammenarbeiten mit diesen Schienen 29 eine Kreisbewegung aus. In dem jeweiligen Hohl raum 31 ist auch der Antrieb für den Räumwagen 32 untergebracht, der vorzugsweise von wenigstens einem Getriebemotor 33 und einem Kettentrieb 34 gebildet wird, der als endlose zahnstangentrieb-ähnliche Übertragungseinrichtung ausgebildet ist. Die Austrageinrichtung 27 ist vorzugsweise als Räumpflug ausgebildet, wozu am Räumwagen 32 in hängender Anordnung Räumorgane 35 angebracht sind, die in vertikaler Richtung mittels Schraubspindeln 36 verstellbar sind. Die Räumorgane 35 sind flügelähnlich ausgebildet und sind stark unterschnitten. Die Räumorgane 35 ragen mit ihren freien Enden jeweils in die Austragringspalte 17 und 18 und fördern das dort angestaute Schüttgut zu dem Austragringspalt 17. Die zweite Austrageinrichtung 28 mit der Räumeinrichtung 28a ist in übereinstimmender Weise wie die erste zuvor beschriebene Austrageinrichtung 27 und die erste Räumeinrichtung 27a ausgelegt, so daß eine nähere Beschreibung entfallen kann.

Unterhalb des jeweiligen als Austragöffnung dienenden Ringschlitzes 21, 21a ist eine ringförmige Drehschüttrinne 37 angeordnet, auf die das Schüttgut nach dem Durchgang durch den Austragringschlitz 21, 21a fällt. Diese Drehschüttrinnen 37 übergeben das aufgenommene Schüttgut zu einer unterhalb derselben liegenden Bandfördereinrichtung 38 bzw. 39, die sich von der Ausgabeseite der Drehschüttrinne 37 im wesentlichen geradlinig zu einem gemeinsamen Austragschacht 40 erstrecken (siehe insbesondere Fig. 2 und 3). Diese Bandfördereinrichtungen 38, 39 sind in Längsrichtung verschiebbar gelagert, um sie in entsprechender Weise verstellen zu können. An den Bandfördereinrichtungen 38, 39, die wie die beiden Austrageinrichtungen 27 und 28 und die zugeordneten Räumeinrichtungen 27a und 28a getrennt und unabhängig voneinander angetrieben sind, weisen Wiege-und Mischeinrichtungen 41 auf, um im gemeinsamen Austragschacht 40 entsprechende Schüttgutmischungen aufzubereiten. Bei dem dargestellten Beispiel verlaufen die Bandfördereinrichtungen 38 und 39 parallel zueinander.

Wie insbesondere aus den Fig. 2 und 3 zu ersehen sind, sind der erste Staukonusring 12 und der zweite Staukonusring 13 in wenigstens einer horizontalen Ebene einerseits am zentralen Staukonus 6 und andererseits an der senkrechten Seitenwand 5 des Silos 1 abgestützt. wozu in regelmäßigen Winkelabständen Radialstreben 42 vorgesehen sind.

Wenn der an in der Zeichnung dargestellte und vorstehend beschriebene Silo 1 beispielsweise als Kohlesilo für ein Kraftwerk bestimmt ist, wird er am oberen Ende 8 im Bereich des Kopfteils 4 mit Kohle als Schüttgut gefüllt und das Schüttgut wird über die Drehschüttrinne 23 im Zusammenwirken mit der Kegelspitze 9 am oberen Ende der Hohlsäule 7 so gleichmäßig verteilt. daß man symmetrisch zur Mittelachse des Silos 1 beispielsweise den Schüttgutkegel 22 erhält, der in Fig.1 bei maximal gefülltem Zustand des Silos 1 gezeigt ist. Im Bereich des Bodens des Silos sind vier konzentrische Austragbereiche vorgesehen, die von den vier Austragringspalten 17 bis 20 gebildet werden und in denen Schüttgut aufgestaut ist. Die flügelförmigen Räumorgane 35 ragen in der Nähe des Bodens 2 des Silos 1 in die so gebildeten Austragringspalte 17 bis 20 und bei der Kreisbewegung des längs den Schienen 29, 30 sich bewegenden Räumwagens 32 wird das Schüttgut aus den Austragringspalten 17 bis 20 zu den jeweiligen Ringschlitzen 21 und 21a nach innen gefördert und fällt dann nach unten auf die jeweilige Drehschüttrinne 37. In entsprechender Weise rutscht Schüttgut in die Austragringspalte 17 bis 20 nach. Dank der symmetrischen Anordnung sinkt hierbei der Schüttgutkegel 22 im Innenraum des Silos 1 ab und bleibt aber symmetrisch zur Silomittelachse. Von der Drehschüttrinne 37 wird das Schüttgut kontinuierlich beim Arbeiten der Austrageinrichtungen 27 bzw. 28 und der Räumeinrichtungen 27a bzw. 28a zu den Bandfördereinrichtungen 38 und 39 übergeben, die das Schüttgut dann zu dem gemeinsamen Austragschacht 40 gegebenenfalls unter Aufbereitung von Kohlemischungen transportieren. Selbst wenn beispielsweise eine der beiden Austrageinrichtungen 27 bzw. 28 und/oder der beiden Räumeinrichtungen 27a bzw. 28a ausfällt, kann die noch arbeitende jeweilige Einrichtung im Notbetrieb eine gleichmässige Entleerung des Innenraumd des Silos 1 gewährleisten, so daß wirksam eine asymmetrische Schüttgutanhäufung im Innenraum des Silos verhindert wird. Daher können die Begrenzungswände des Silos 1 dünnwandig aus Beton hergestellt werden, wodurch nicht nur Erstellungskosten, sondern auch Materialkosten eingespart werden können. Selbstverständlich reduziert sich hierdurch auch der Platzbedarf eines solchen Silos 1. Im Stillstand der Anlage ist die Drehschüttrinne 23 dicht verschlossen und der Raum unterhalb des Silos 1, in dem beispielsweise die Bandfördereinrichtungen 38, 39 angeordnet sind, ist ebenfalls hermetisch dicht verschlossen. Hierdurch wird verhindert, daß im Stillstand Luft durch die Kohle als Schüttgut gesogen wird.

Die Austragseinrichtungen 27 und 28 und die Räumeinrichtungen 27a, 28a arbeiten sehr zuverlässig und sind äußerst robust, so daß äußerst geringe Wartungskosten zu erwarten sind. Mit Hilfe der Wiege-und Mischeinrichtungen 41 kann man individuelle Mischungsverhältnisse auf einfache Weise einstellen.

Nachstehend wird ein Beispiel eines Silos 1 mit Abmessungen angegeben. Wenn der Silo beispielsweise ein Fassungsvermögen von 84 000 m³ haben soll, was 65 000 t Kohle entspricht, so beträgt der Innendurchmesser des Silos 1 50 m und die Höhe des zylindrischen Teils etwa 37 m. Die Höhe der Spitze des Schüttgutkegels 22 beläuft sich bei einem Neigungswinkel von etwa 40° auf ungefähr 20 m. Der Außendurchmesser des Silos 1 beträgt 51 m und die Höhe des zylindrischen Teils 48 m. Das Dachteil 3 hat eine Neigung von 40°. Die Gesamthöhe des Silos 1 bis zur Spitze des Kopfteils 4 beläuft sich auf etwa 65,5 m. Der zentrale Staukonus 6 im Innenraum des Silos 1 hat am Boden 2 einen Grunddurchmesser von 11,5 m und die als Hohlsäule 7 ausgebildete Verlängerung hat einen Außendurchmesser von 3 m. Die Spitze des ersten Staukonusrings 12 liegt auf einem Kreis mit einem Durchmesser von 80,5 m, die Spitze des dritten Staukonusrings 14 liegt auf einem Kreis mit einem Durchmesser von 29 m und die Spitze des zweiten Staukonusrings 13 liegt auf einem Kreis mit einem Durchmesser von 39,5 m. Die senkrechte Höhe des ersten Staukonusrings 12 und des zweiten Staukonusrings 13 beläuft sich auf 6 m und die Grundfläche endet etwa 1 m oberhalb des Bodens 2 des Silos 1 mit den Austragringschlitzen 21, 21a. Die Spannweite der flügelförmigen Räumorgane 35 von Spitze zu Spitze beträgt etwa 7 m und die beiden eine Kreisbewegung ausführenden Austrageinrichtungen 27 und 28 haben einen mittleren Durchmesser von 18,5 und 39,5 m. Die Neigung der Wand beträgt 70°, bezogen auf die Horizontale. Die maximale Hinterschneidung jedes Abstreifers des Räumorgans 35 beträgt etwa 1,5 m, so daß man eine insgesamt überstrichene Fläche von 546 m³ erhält. Bezogen auf einen Silodurchmesser von 50 m wird durch die Räumorgane 35 somit etwa 27,8% des Siloquerschnitts aktiv zum Austragen genutzt.

Selbstverständlich stellen die vorstehend aufgeführten Bemessungsangaben keine Beschränkung dar, sondern sie dienen nur als Beispiel zur Veranschaulichung der Größe eines solchen Silos 1 beispielsweise.

## Ansprüche

1. Silo für Schüttgut mit einer im Bereich des Silobodens vorgesehenen Austrageinrichtung mit wenigstens einer beweglichen Räumeinrichtung, die das Schüttgut zu wenigstens einer Austragöffnung lenkt, dadurch **gekennzeichnet,** daß im Bereich der Silomittelachse ein zentraler Staukonus (6) angeordnet ist, der in einem horizontalen Abstand von wenigstens einem Staukonusring (12, 13, 14) konzentrisch derart umgeben ist, daß zwischen den Außenflächen des zentralen Staukonus (6) und des Staukonusrings (12,13,14) wenigstens zwei konzentrische und im wesentlichen in einer gemeinsamen Horizontalebene liegenden Austragringspalte (17 bis 20) gebildet werden, und daß die wenigstens eine Räumeinrichtung (27, 28) eine Kreisbewegung um die Silomittelachse ausführt und ihre Räumorgane (35) das Schüttgut aus den Austragringspalten (17 bis 20) zu der Austragöffnung lenkt, die als Ringschlitz (21, 21a) ausgebildet und konzentisch zwischen den Austragringspalten (17 bis 20) angeordnet ist.

2. Silo nach Anspruch 1, dadurch gekennzeichnet, daß die Räumeinrichtung (27, 28) als Räumwagen (32) ausgebildet ist, der sich über einen Kreisbogenteilabschnitt erstreckt und entsprechend bogenförmig gekrümmt ausgebildet ist.

3. Silo nach Anspruch 1 oder 2, dadurch gekennzeichnet, daß die Räumeinrichtung (27a, 28a) längs Schienen (29, 30) zur Ausführung ihrer Kreisbewegung verfahrbar ist, die in einem Hohlraum (31) im unteren Bereich des Staukonusrings (12, 13) untergebracht sind.

4. Silo nach einem der Ansprüche 1 bis 3, dadurch gekennzeichnet, daß die Räumorgane (35) hängend an der Räumeinrichtung (27a, 28a) angebracht sind.

5. Silo nach Anspruch 4, dadurch gekennzeichnet, daß die Räumorgane (35) mittels Schraubspindeln (36) in Vertikalrichtung verstellbar sind.

6. Silo nach einem der Ansprüche 1 bis 5, dadurch gekennzeichnet, daß die Räumeinrichtung (27a, 28a) als Räumpflug ausgebildet ist.

7. Silo nach einem der Ansprüche 3 bis 6, dadurch gekennzeichnet, daß der Antrieb für die Ausführung der Kreisbewegung der Räumeinrichtung (27a, 28a) im Hohlraum (31) im unteren Bereich des Staukonus (12, 13) angeordnet ist.

8. Silo nach Anspruch 7, dadurch gekennzeichnet, daß als Antrieb Getriebemotoren (33) und Kettentriebe (34) als endlose zahnstangentriebähnliche Übertragungseinrichtungen vorgesehen sind.

9. Silo nach einem der vorangehenden Ansprüche, dadurch gekennzeichnet, daß der wenigstens eine Staukonusring (12, 13) mittels Radialstreben in regelmäßigen Winkelabständen am zentralen Staukonus (6) in wenigstens einer horizontalen Ebene derart abgestützt ist, daß die Grundebene des Staukonusrings (12, 13) vertikal oberhalb der Grundebene des zentralen Staukonus (6) bzw. des Bodens (2) des Silos (1) liegt.

10. Silo nach einem der vorangehenden Ansprüche, dadurch gekennzeichnet, daß unterhalb des als Austragöffnung dienenden Ringschlitzes (21, 21a) eine ringförmige Drehschüttrinne (37) angeordnet ist, die das aufgenommene Schüttgut zu einer unterhalb liegenden Bandfördereinrichtung (38, 39) übergibt.

11. Silo nach Anspruch 10, dadurch gekennzeichnet, daß die Bandfördereinrichtung (38, 39) sich geradlinig bis zur Ausgabeseite der Drehschüttrinne (37) erstreckt und in einem Austragschacht (40) des Silos (1) endet.

12. Silo nach Anspruch 10 oder 11, dadurch gekennzeichnet, daß an der Bandfördereinrichtung (38, 39) Wiege-und Mischeinrichtungen (41) angeordnet sind.

13. Silo nach einem der vorangehenden Ansprüche, dadurch gekennzeichnet, daß am oberen Ende des Silos (1) mittig eine Drehschüttrinne (23) als Aufgabeeinrichtung zur bezüglich der Mittelachse des Silos symmetrischen Schüttgutaufgabe angeordnet ist.

14. Silo nach Anspruch 13, dadurch gekennzeichnet, daß die Drehschüttrinne (23) mittels eines Getriebemotors (24) und eines Drehkranzes (25) angetrieben ist.

15. Silo nach einem der vorangehenden Ansprüche, dadurch gekennzeichnet, daß der zentrale Staukonus (6) als Mittelsäule (7) des Silos (1) bis zur Nähe des oberen Endes (8) des Silos verlängert ist und ihr oberes Ende als Kegelspitze ausgebildet ist.

16. Silo nach Anspruch 15, dadurch gekennzeichnet, daß die Mittelsäule (7) als Hohlsäule ausgebildet ist und ihr Innenraum als ein Steigschacht zur Inspektionszwecken dient.

17. Silo nach Anspruch 15 oder 16, dadurch gekennzeichnet, daß die Mittelsäule (7) das Silodachteil (3) und den Silokopf (4) mit der Drehschüttrinne (23) trägt.

18. Silo nach Anspruch 17, dadurch gekennzeichnet, daß das Silodachteil (3) zur Horizontalen geneigt ist.

19. Silo nach einem der vorangehenden Ansprüche, dadurch gekennzeichnet. daß wenigstens die Außenwand und der zentrale Staukonus (6) mit der Mittelsäule (7) als dünnwandige Betonkonstruktion ausgeführt sind.

20. Silo nach Anspruch 19, dadurch gekennzeichnet, daß auch der den zentralen Staukonus (6) konzentrisch umgebende Staukonusring (12, 13. 14) aus Beton hergestellt ist.

21. Silo nach einem der vorangehenden Ansprüche, dadurch gekennzeichnet, daß konzentrisch zum ersten Staukonusring (12) horizontal im Abstand wenigstens ein zweiter Staukonusring (13) angeordnet ist und zwischen den beiden Staukonusringen (12. 13) ein mit dem Siloboden (2) verbundener weiterer Staukonusring (14) derart vorgesehen ist, daß sich wenigstens zwei weitere konzentrische Austragspalte (19, 20) bilden, denen eine zweite Austrageinrichtung (28) und eine zweite Räumeinrichtung (28a) zugeordnet sind, die entsprechend der ersten Austrageinrichtung (27) und der ersten Räumeinrichtung (27a) ausgebildet sind.

22. Silo nach Anspruch 21, dadurch gekennzeichnet, daß die beiden Austrageinrichtungen (27, 28) und die Räumeinrichtungen (27a, 28a) getrennt und unabhängig voneinander angetrieben sind.

23. Silo nach Anspruch 21 oder 22, dadurch gekennzeichnet, daß die beiden Bandfördereinrichtungen (38, 39) parallel verlaufen und zu einem gemeinsamen Austragschacht (40) führen.

24. Silo nach einem der Ansprüche 21 bis 23, dadurch gekennzeichnet, daß die beiden konzentrischen Staukonusringe (12, 13) über mehrere gemeinsame Radialstreben (42) am zentralen Staukonus (6) und an der senkrechten Silowand (5) abgestützt sind.

25. Silo nach einem der Ansprüche 1-19 oder 21-24, dadurch gekennzeichnet, daß der oder die Staukonusringe (12, 13, 14) aus Stahl, vorzugsweise Stahlblech,hergestellt ist oder sind.

FIG. 1

# FIG. 2

# FIG. 3

FIG. 4

0 254 953

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 713 552 (SCHNYDER)<br><br>* ganzes Dokument * | 1-3,6<br>10,13,<br>14 | B 65 G 65/30<br>B 65 G 65/40<br>E 04 H 7/22 |
| A | | 11,15<br>17,19,<br>25 | |
| A | DE-C- 890 626<br>(DIDIER-KOGAG-HINSELMANN<br>KOKSOFENBAU UND GASVERWERTUNG)<br>* Seite 1, Zeilen 32-61; Figur 1 * | 1,4 | |
| A | DE-B-1 127 811 (MASCHINENFABRIK<br>BUCKAU R. WOLF)<br>* Spalte 1, Zeilen 34-40 * | 12 | RECHERCHIERTE SACHGEBIETE (Int. Cl.4) |
| A | FR-A-2 535 374 (DUBROEUCO)<br>* Seite 1, Zeilen 1-27; Seite 3,<br>Zeile 32 - Seite 4, Zeile 11;<br>Seite 6, Zeilen 26-28; Figuren<br>1,2 * | 15-19 | B 65 G 65/00<br>E 04 H 7/00 |
| A | PATENT ABSTRACTS OF JAPAN, Band<br>5, Nr. 14 (M-52)[686], 28.<br>Januar 1981; & JP - A - 55 145<br>938 (KAJIMA KENSETSU) 13.11.1980<br><br>--- -/- | 1,21 | |

Der vorliegende Recherchenbericht wurde für alle Patentansprüche erstellt.

| Recherchenort<br>BERLIN | Abschlußdatum der Recherche<br>28-10-1987 | Prüfer<br>SIMON J J P |
|---|---|---|

KATEGORIE DER GENANNTEN DOKUMENTE
X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE-A-2 116 567 (LUCKS)<br>* Seite 4, Zeilen 14-21; Figuren 1,2 * | 23 | |

-----

RECHERCHIERTE SACHGEBIETE (Int. Cl. 4)

Der vorliegende Recherchenbericht wurde für alle Patentansprüche erstellt.

| Recherchenort | Abschlußdatum der Recherche | Prüfer |
|---|---|---|
| BERLIN | 28-10-1987 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82